Europäisches Patentamt

**European Patent Office**

Office européen des brevets

(11) Publication number: **0 037 864**
**A1**

# EUROPEAN PATENT APPLICATION

(21) Application number: **80301121.2**

(22) Date of filing: **09.04.80**

(51) Int. Cl.³: **A 61 C 13/22**

(43) Date of publication of application: **21.10.81**
**Bulletin 81/42**

(84) Designated Contracting States: **AT BE CH DE FR GB IT LI LU NL SE**

(71) Applicant: **Scott, Edward S., 1818 South Cincinnati, Tulsa Oklahoma 74119 (US)**

(72) Inventor: **Scott, Edward S., 1818 South Cincinnati, Tulsa Oklahoma 74119 (US)**

(74) Representative: **Kerr, Simonne June et al, European Patent Attorney POTTS, KERR & CO. 27, Sheet Street, Windsor, Berkshire SL4 1BY (GB)**

(54) **Dental post and method of installing.**

㊗ This invention involves a dental post (10) which facilitates the seating of a denture on the dental post (10) and a method of installing posts (10) in the roots (12) of spaced apart teeth having non-parallel root canals by first drilling holes in the teeth (12) in alignment with the root canals placing a dental post (10) in each of the teeth (12), measuring the angle of the divergence (38) of the dental posts (10) and installing permanent dental posts (10) having attachment stems (18) offset relative to the anchor stems (16) the offset stem dental posts (10) being rotated in the teeth so that the axes (34) of the attachment stems (18) are parallel.

"DENTAL POST AND METHOD OF INSTALLING"

## BACKGROUND OF THE INVENTION

1. Field of the Invention

This invention refers to means of attaching a denture in the mouth of a person. It is related to posts which facilitate the seating of dentures, provides cushioning means to ease the masticatory load, and enhances the retention of the denture.

The invention is also related to a method of employing dental posts which are secured in two or more teeth having non-parallel root canals, and means is provided for arranging the dental posts so that the axis of each is parallel to the other, thereby insuring improved anchoring of the denture and improved ease of removing and inserting the denture.

2. Description of the Prior Art

It is known in dentistry to use posts which are permanently anchored to natural teeth to support dentures. An article entitled, "Fabrication of a Simple Ball-Socket Atatchment" by Joseph T. Quinlivan, D.D.S in the August, 1974 issue of the Journal of Prosthetic Dentistry, Volume 32, No. 2, and a subsequent article entitled, "An Attachment for Overlay Dentures" by Dr. Quinlivan in the September, 1974 issue of the same journal, Volume 32, No. 3, disclosed a method of attaching dentures. Patent No. 2,112,007, issued March 22, 1938 to P.B. Adams for "Anchoring Means for False Teeth" shows a type of ball and socket device. The same general type of device is shown in Patent 3,085,334 issued April 16, 1963 to J.L. Bischoff et al for a denture arrangement. Reference may be also had to United States Patent 3,656,236 showing a similar ball-type attachment means. These references teach devices and methods of supporting dentures to dental posts mounted in natural teeth. The posts are of the type having an enlarged head which is received in an elastomeric O-ring in a recess formed in the denture.

The prior art presents difficulties insofar that as the head member of the dental post is received in the recess of the denture, fluid present in the recess is trapped therein, hindering entry and impairing the retention of the denture.

When a dental post is set in a tooth, the first step is to bore a hole in the tooth. This hole must generally follow the root canal of the tooth, otherwise there is danger that the hole can penetrate through the side of the tooth or the hole can severely weaken the tooth. Natural teeth grow in the mouth in various angles; and when two or more spaced-apart natural teeth are employed for anchoring a denture, it is rare that the root canals of the teeth are parallel to each other. This means that manufactured or pre-cast dental posts of the type presently employed, when mounted in holes drilled in natural teeth, generally extend in non-parallel relationship. When dentures are inserted in position, the recesses in the dentures which receive the posts must accommodate these diverging, non-parallel posts which makes the dentures more difficult to insert and remove and, in addition, impairs the desired objective of a firm, secure fit of the dentures on the dental posts. Prior art requires the fabrication of individual, customized dental posts utilizing the lost wax technique to cast posts that will be parallel when the roots are divergent or convergent, or the optional method of soldering that portion of the posts which extends beyond the root in parallel relationship.

00378 64

-3-

## SUMMARY OF THE INVENTION

The present invention provides a novel device for securing a denture in position in a manner for overcoming the foregoing disadvantages. The novel device comprises a dental post having a head member provided with a groove which provides a passageway for fluid trapped in the recess of the denture during the seating process. Further, the invention provides a method of installing dental posts in spaced-apart teeth to receive dentures. The method employs dental posts of the type having a body with an integral anchor system which is symmetrical in all cross-sections taken perpendicular to the stem axis. In addition, the dental post includes an integral attachment stem extending from the body in the direction opposite the anchor stem. In the prior art the axis of the attachment and anchor stem are coincident. The present invention contemplates an apparatus in which the axis of the attachment stem is offset at a preselected angle relative to the axis of the anchor stem. In the practice of the method it is desirable to have available a plurality of dental posts wherein the angle of divergence of the axis of the anchor and the attachment stem are different. In practicing the method, a hole is drilled in first and second teeth, each hole being in general alignment with the root canal of the tooth. Attachment posts of the type wherein the anchor stem and the attachment stem portions are coaxial are positioned in the holes drilled in the teeth. The angle of divergence of the axis of the two dental posts is measured, this angle being generally the angle of divergence of the root canals of the two teeth. The user then selects two dental posts wherein the total of the angle of divergence of the dental posts is equal to the measured angle of divergence of the holes drilled in the root canals. These dental posts are then positioned in the drilled holes and rotated so that the two dental posts have their attachment stems extending parallel to each other. The dental posts are then

0037864

permanently anchored in the holes in the teeth utilizing this orientation.

## BRIEF DESCRIPTION OF THE DRAWINGS

FIGURE 1 is a perspective view of a full denture in spaced relation to the mandible or jawbone provided with two dental posts and illustrates how the full denture seats on the dental posts.

FIGURE 2 is a perspective view of a dental post embodying the invention.

FIGURE 3 is a sectional elevational view of a mandible showing an endodontically prepared tooth root and having a dental post embodying the invention.

FIGURE 4 is a sectional view partly in elevation of a tooth root carrying a dental post embodying the invention residing securely in a complementary recess provided in the denture to be seated thereon.

FIGURE 5 is a cross-sectional view showing the step of drilling a hole in a tooth which has been cut off to receive a dental post, the drill generally following the root canal of the tooth.

FIGURE 6 is a cross-sectional view which shows a dental post positioned in the tooth having been drilled as in FIGURE 1, the dental post employed being of the type wherein the axis of the anchor stem and attachment stem portions are coincident so that when anchor posts are positioned in two teeth as in FIGURE 1, the angle of divergence of the teeth can be measured.

FIGURE 7 is a cross-sectional view of a dental post positioned in the hole drilled in the tooth, the dental post having the axis of the attachment stem portion offset relative to the axis of the anchor stem portion so that by employing the method of this invention the dental post can be arranged in the mouth of the user in a manner to insure that the axes of two or more separate dental posts are parallel.

FIGURE 8 is a plan view showing how the dental posts of the type shown in FIGURE 7 may be rotated to orient the axis of inclination of the attachment stem portion relative to the anchor stem portion to enable two separate dental posts to be arranged so that the attachment stem axes are parallel.

FIGURE 9 is a partial cross-sectional view taken through a tooth employing a dental post of this type having an offset attachment stem portion and showing a portion of a denture having an O-ring in recess for receiving the attachment stem portion of the dental post.

-6-  0037864

## DESCRIPTION OF THE INVENTION

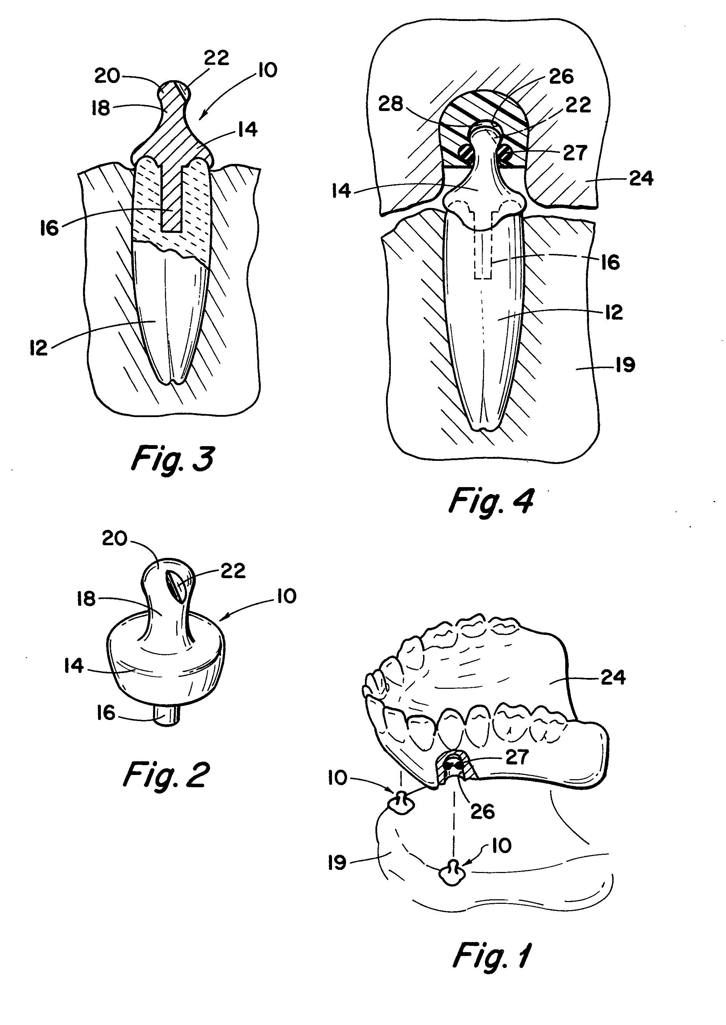

Referring to FIGURES 1 through 4, reference character 10 generally indicates a dental post adapted to be embedded in a tooth root 12 and comprises a substantially circular or disc-shaped main body portion 14 having an anchor stem member 16 extending axially outwardly therefrom in one direction for insertion into the tooth root 12 as will be hereinafter set forth. An attachment stem member 18 extends axially outwardly from the body 14 and in an opposite direction with respect to the stem 16 and is provided with a bulbous or enlarged head member 20 at the outer or exposed end thereof.

The head member 20 is substantially spherical in configuration and is provided with a slit 22 disposed angularly therein with respect to the axis of the attachment stem 18, said axis preferably being perpendicular to the plane of the main body 14, but not limited thereto.

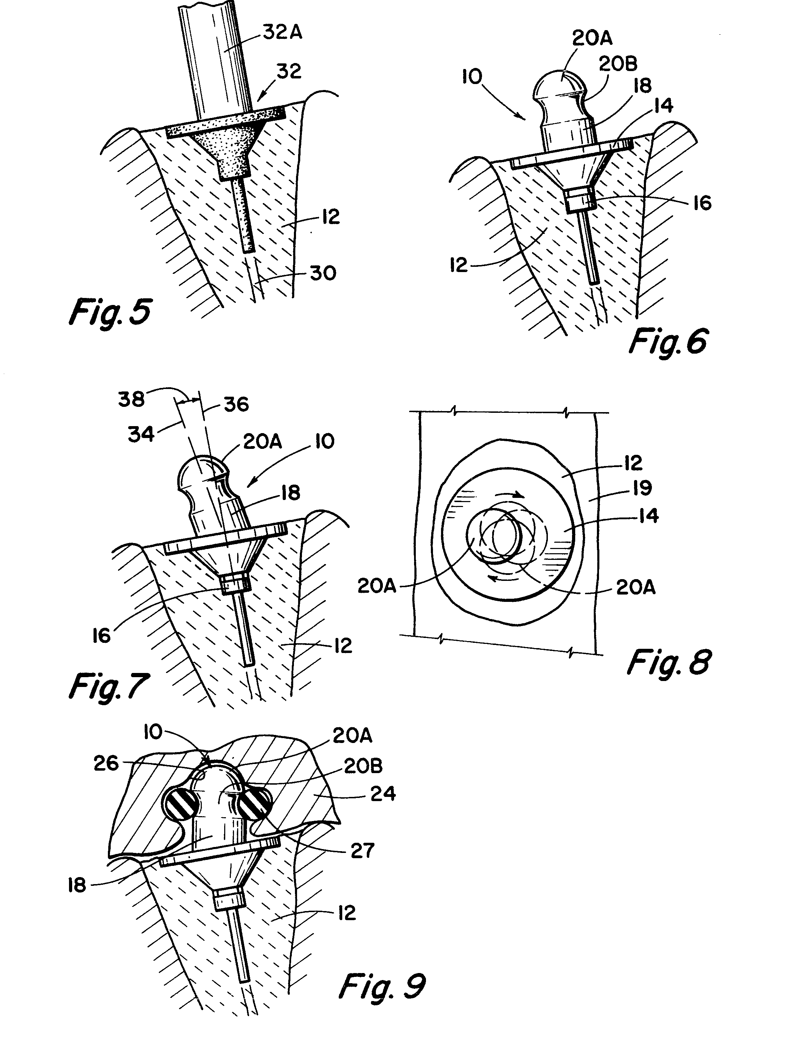

The dental post 10 is anchored rigidly to the tooth root 12 which has been endodontically prepared for receiving the anchor in a manner illustrated in FIGURE 5 to be described subsequently. The main body 14 is made to overlap and seal the tooth root. The attachment stem 18 protrudes from the mandible and beyond the gigival or gum 19 to be received in a complementary recess 26 provided in the denture 24 to be seated thereon. The recess 26 is defined in part by an elastomeric member 27 having an opening therethrough wherein the head member 20 is received by compression of the elastomeric member 27 whereby the elastomeric member 27 applies retentive force to the head member 20, thus securing the denture 24 in place.

Any fluid confined in the recess 26 as the head member 20 is being inserted therein finds relief through the slit 22, thus facilitating the entry or insertion of the head member 20 therein. When the head member 20 resides within the elastomeric member 27, the slit 22 provides constant passageway for fluid present therein.

As an alternate version of this invention, the slit 22 may be positioned on the head 20 to reside wholly within the elastomeric member 27 opening. The elastomeric member 27 thereby forms an airtight seal around the head 20 after it has passed therethrough, whereby a certain amount of fluid 28 is trapped. The trapped fluid 28 provides a cushion to ease the masticatory load on head 20. In addition, the trapped fluid 28 increases the retentive force to better secure the denture 24 in place.

FIGURE 6 shows another embodiment of the dental post. The anchor stem 16 may be of a variety of configurations but should be circular about all cross-sections taken perpendicular to its axis. The attachment stem 18 has a semi-spherical top portion 20A and below that, a groove 20B. When the dental post 10 is permanently affixed to tooth 12, a denture 24 as shown in FIGURE 9 is anchored in place utilizing the dental post. The denture 24 is held in place when the O-ring elastomeric member 27 is forced past the semi-spherical head 20A and into the groove 20B of the attachment ste.

The attachment post 16 shown in FIGURE 6 is the type in which the axis of the attachment stem portion 16 is coincident with the axis of the anchor stem portion 18.

The method of installing the dental posts of FIGURE 6 is illustrated in FIGURE 5. Every natural tooth 12 has a root canal 30. A drill, generally indicated by numeral 32, is utilized having the external configuration of the body 14 and anchor stem 16 of a dental post. The drill 32 has a drill stem 32A which fits into a device (not shown) for rotating the drill. The drill is typically formed of metal and has an abrasive coating on the exterior surface. The drill 30 generally follows the root canal 30. This is true since the root canal represents a small passageway in the tooth which is filled only with soft material. The drill automatically tends to follow the path of least resistance. In addition, the root canal is normally located centrally in the tooth so that by following the root canal the drill tends to remain centrally positioned in the tooth with the maximum tooth material extending to all sides of the hole formed in the tooth by the drill. If the operator tries to substantially depart from the direction of the root canal 30 in the use of drill 32 there is a great chance the tooth will be weakened and the further possibility that the drill can extend through the sides of the tooth. For these reasons it can be seen that in the normal course of installing dental posts 10 a hole is drilled following the root canal. The importance of this fact is that teeth are not normally oriented such that the root canals are parallel to each other. Thus, an operator using a drill 32 as in FIGURE 5 drilling holes to receive dental posts 10 to support a denture will normally find that when the dental posts are installed into spaced-apart teeth, the axis of the attachment stem 18 of one post is not parallel to the axis of the other post. Thus, when it is required to install two or more dental posts 10 to support dentures in the mouth of the user it is ordinarily found that the dental posts are not parallel to each other. This means that when dentures of the type illustrated by the numeral 24 in FIGURE 1 are inserted in the mouth of a user there is difficulty in placement of the dentures over non-parallel attachment stems, and once in position the dentures are not held as securely as they would be if the stems were parallel to each other. The essence of this invention is the provision of a dental post and a method of installing it to insure that the attachment stems of two or more dental posts are parallel to each other.

Referring to FIGURE 7, a dental post generally indicated by the numeral 10 is shown with the anchor stem portion 18 mounted in the tooth 12 and the hole drilled by a drill bit as shown in FIGURE 5 but in which the axis 34 of the attachment stem portion 18 is displaced from the axis 36 of the anchor stem portion 18. The angle of divergence of the axes 36 and 34 of the attachment stem 18 and anchor stem portion 16 of the dental post is indicated by the numeral 38. In the practice of the method the dentist has available a number of dental posts 10 having different angles 38. Typically, the dental posts may be manufactured wherein the angle of divergence 38 is 5°, 10°, 15°, 20°, 25°, etc. It can be seen that sets of dental posts can be produced having degrees of difference of very small amounts such as differing only by 1° increments. The smaller the degree of increments available to the dentist the more perfectly parallel two or more dental posts can be installed in the mouth of the user.

When the dental posts of FIGURE 7 is inserted in a hole formed in the tooth 12 and before it is anchored in position, the dental post may be rotated through a full 360° as shown in FIGURE 8 so that when two or more dental posts are employed they may be rotated so as to be parallel to each other in the mouth of the user.

The method of utilizing the dental posts of the type illustrated in FIGURE 7 is as follows. The dentist first drills a hole in each of the teeth to be utilized in anchoring a denture. Assuming that the denture is to be anchored with two teeth as illustrated in FIGURE 1, the dentist first drills a hole in each of the teeth using a bit as shown in FIGURE 5, the bit generally following the root canal of each tooth. After a hole is drilled in each of the two teeth, the dental posts of the type shown in FIGURE 6 are inserted in the holes. The post of FIGURE 6 is of the type wherein the axis of the anchor stem 16 and the attachment stem 18 are coincident, that is, where the angle of divergence is zero. With the zero divergent dental posts in position in the two teeth the dentist then measures the angle of the divergence of the attachment stem portions. Assuming the angle of divergence of the attachment stems is 20°, the dentist then removes the dental posts having zero divergence and selects two dental posts having a degree of divergence such that the total equals 20°. For instance, the dentist may select two posts as illustrated in FIGURE 7 wherein the angle of the divergence 38 of each is 10° or he may select one post where the angle of divergence is 15° and another where the angle of divergence is 5°. The dentist then inserts the two selected posts into the opening drilled in the two teeth. The posts may then be rotated, as illustrated in FIGURE 8, to the position wherein the attachment stems of the two posts are parallel. This establishes the orientation of the dental posts. The dentist may then permanently anchor a post in position such as by noting the orientation, removing the post, depositing a bonding cement in the hole and replacing the dental posts in the selected orientation. In this manner then the dentist has achieved an arrangement wherein the dental posts are permanently secured in the mouth of the user with the axes of the attachment stem portions being parallel to each other.

FIGURE 9 is a cross-sectional view of a cut-away portion of a tooth 12 having a dental post 10 therein and having attached to it a denture 24. The denture recess 26 receives the O-ring 27 which fits in the groove 20B of the dental post's attachment stem portion 18. When the attachment stem portions of two or more dental posts are aligned so that the axis of each is generally parallel to the other it can be seen that removing and inserting the denture is much more easily accomplished and, in addition, the denture is more securely anchored in position. If the attachment stem portions are non-parallel the O-rings 26 must be compressed much more in the process of inserting or removing dentures resulting in O-rings being more easily dislodged or quickly worn. Thus the method and apparatus of this invention provides a greatly improved way of providing positive anchoring of removable dentures.

It can be seen that, although not illustrated, the dental posts of FIGURES 6,7, and 9 can have a slit formed in the semi-spherical head portions 20A as described with reference to FIGURES 2, 3, and 4 to further facilitate the insertion of dentures into position in the mouth of the user.

**0037864**

## CLAIMS

1. A dental post for removably securing a denture to a mandible, a denture apparatus having therein a recess defined in part by an elastomeric member having an opening therethrough characterized in that the dental post (10) comprises a body (14) having an anchor stem portion (16) circular in all cross-section taken perpendicular the stem axis, the anchor stem being adaptable for permanent attachment to the mandible and an attachment stem portion (18) extending from the body (14) in the direction opposite the anchor stem (16) the attachment stem (18) having an enlarged outer head portion (20) dimensioned to be received through a denture apparatus (24) elastomeric member (27) by compression of the elastomeric member (27) whereby the elastomeric member (27) applies retentive force to the head portion (20) and wherein the axis (34) of the attachment stem (18) is offset by a preselected angle (38) from the axis (36) of the anchor stem (16).

2. A dental post according to claim 1, characterized in that the attachment stem head portion (20) has a slit (22) on the exterior surface providing a fluid passageway when the head member (20) passes through the opening in an elastomeric member (27).

3. A dental post according to claim 1 or 2, characterized in that the head member (20) is configured substantially as a segment of a sphere.

4. A method of installing a first and second dental post in the roots of spaced-apart first and second teeth having non-parallel root canals, the posts being of the type having a body with an integral symmetrical anchor stem circular in all cross-section taken perpendicular the stem axis and an integral attachment stem extending from the body in the direction opposite the anchor stem and wherein the axis of the attachment stem is at a preselected angle from the axis of the anchor stem, characterized in that it comprises drilling a hole in each of the first and second teeth (12) each hole being in general alignment with the root canal (30) of the tooth, for measuring purposes, placing the anchor stem portions (16) of dental posts (10) in the holes drilled in the two teeth (12) the attachment stem (18) of both detal posts (10) being coaxial with the anchor stems (16), measuring the angle of divergence (38) of the axes (34, 36) of the attachment stems (18), selecting different dental posts (10) having the attachment stem axis (34) offset from the anchor stem axis (36) so that the combined angle of offset (38) of the two dental posts (10) equals the angle of divergence measured removing the dental posts (10) inserted in the teeth (12) for measuring purposes and inserting the dental posts selected into the holes in the teeth (12), rotating the dental posts (10) until their axes (34) are substantially parallel and permanently anchoring the dental posts (10) in the teeth (12) in the orientation established.

0037864

1 / 2

Fig. 3

Fig. 4

Fig. 2

Fig. 1

Fig. 5

Fig. 6

Fig. 7

Fig. 8

Fig. 9

# EUROPEAN SEARCH REPORT

European Patent Office

EP 80 30 1121.2

| Category | Citation of document with indication, where appropriate, of relevant passages | Relevant to claim |
|---|---|---|
| | US - A - 4 193 194 (DALISE) <br> * column 2, lines 34 to 40 * <br> -- | 1,3 |
| | DE - U - 1 606 988 (DEUTSCHE GOLD- UND SILBER -SCHEIDEANSTALT) <br> * page 2, lines 15 to 25 * <br> -- | 1 |
| | CH - A - 249 506 (ACKERMANN) <br> * page 2, lines 60 to 72 * <br> -- | 1 |
| D | US - A - 3 085 334 (BISCHOF et al.) <br> -- | |
| D | US - A - 3 656 236 (KURER) <br> -- | |
| D | JOURNAL OF PROSTHETIC DENTISTERY, Vol. 32, No. 2, August 1974 J.T. QUINLIVAN "Fabrication of a Simple Ball-Socket Attachment" pages 222 to 225 <br> -- | |
| D | JOURNAL OF PROSTHETIC DENTISTERY, Vol. 32, No. 3, September 1974 J.T. QUINLIVAN "An Attachment of Overlay Dentures" pages 256 to 261 <br> -- | |
| A | US - A - 2 691 219 (SANDRI) <br> -- | |

./..

**DOCUMENTS CONSIDERED TO BE RELEVANT**

**CLASSIFICATION OF THE APPLICATION (Int. Cl.3)**

A 61 C  13/22

**TECHNICAL FIELDS SEARCHED (Int.Cl.3)**

A 61 C  5/00
A 61 C  8/00
A 61 C  13/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 05-12-1980 | SIMON |

EPO Form 1503.1  06.78

European Patent
Office

## DOCUMENTS CONSIDERED TO BE RELEVANT

| Category | Citation of document with indication, where appropriate, of relevant passages | Relevant to claim |
|---|---|---|
| A | US - A - 3 414 974 (ROTHERMANN) -- | |
| A | DE - A1 - 2 741 366 (PINNOCKCHOICE) -- | |
| A | DIE QUINTESSENZ, No. 4, April 1974 H. BÖTTGER "Kronen und Brücken" * pages 91 to 98 ----- | |

CLASSIFICATION OF THE
APPLICATION (Int. Cl.3)

TECHNICAL FIELDS
SEARCHED (Int. Cl.3)

EPO Form 1503.2   06.78